# EUROPÄISCHE PATENTSCHRIFT

(11) **EP 2 844 185 B1**
(45) Veröffentlichungstag und Bekanntmachung des Hinweises auf die Patenterteilung: **22.03.2017**
(21) Anmeldenummer: 13727027.8
(22) Anmeldetag: 29.04.2013
(51) Int. Cl.: A61C 11/02, A61C 19/045, A61C 13/00

(54) **VERFAHREN ZUR HERSTELLUNG VON ZAHNERSATZ UND ARTIKULATOR ZUR DURCHFÜHRUNG DES VERFAHRENS**
METHOD FOR PRODUCING DENTURES AND ARTICULATOR FOR CARRYING OUT THE METHOD
PROCÉDÉ DE PRODUCTION D'UNE PROTHÈSE DENTAIRE ET ARTICULATEUR PERMETTANT LA MISE EN UVRE DUDIT PROCÉDÉ

(30) Priorität: 02.05.2012 DE 102012008516; 11.03.2013 DE 102013004102
(43) Veröffentlichungstag der Anmeldung: 11.03.2015
(73) Patentinhaber: AVO SAX-GmbH, 08223 Falkenstein (DE)
(72) Erfinder: VOGEL, Andreas, 04103 Leipzig (DE)
(74) Vertreter: Schulte & Schulte
(86) Internationale Anmeldenummer: PCT/DE2013/000230
(87) Internationale Veröffentlichungsnummer: WO 2013/163977

(56) Entgegenhaltungen:
- WO-A1-2005/060865
- CA-C- 1 284 041
- US-A- 3 321 832
- US-A1- 2007 196 782

## Beschreibung

Die Erfindung betrifft ein Verfahren zur Herstellung von Zahnersatz, bei dem zunächst ein Abdruck des Oberkiefers und des Unterkiefers mit den Zähnen hergestellt wird und bei dem dann in einer als Artikulator bezeichneten Vorrichtung zur Simulation von Unterkieferbewegungen auf entsprechenden die Ober- bzw. Unterkieferabdrücke aufnehmenden Trägern zum Zahntechniker verbracht werden, woraufhin dort der Zahnersatz unter Bewegung entweder des Unterkieferabdruckes oder meist des Oberkieferabdruckes um die den Kiefergelenken des Patienten ähnlichen, durch Bewegung des Unterkiefers des Patienten ermittelten Bewegungsbahnen und daraus hergestellten und als Artikulatorgelenke eingesetzten Gelenkraumduplikate geformt und unter Berücksichtigung meist des Unterkieferabdruckes fertig gestellt, dann zum Zahnarzt zurückgebracht, dem Patienten eingesetzt und vom Zahnarzt nachbearbeitet wird. Die Erfindung betrifft außerdem eine Vorrichtung zur Simulation von Unterkieferbewegungen und damit zur Durchführung des Verfahrens nach den Ansprüchen 1-5, bestehend aus einem Artikulator mit Oberkiefermodellhalter mit Stützstift und einem Unterkiefermodellhalter, wobei Oberkiefermodellhalter und Unterkiefermodellhalter über Artikulatorgelenke, die mit Hilfe eines Vorgerätes den menschlichen Kiefergelenken möglichst angepasst herstellt sind, gelenkig miteinander verbunden sind.

Solche Verfahren und auch Artikulatoren sind grundsätzlich bekannt (DE 10 2005 013 459 A1, EP 0 233 857 B1) und werden in den heutigen Zahnarztpraxen und Zahntechniklaboren angewendet. Die dazu im Einsatz befindlichen Artikulatoren ähneln sich im Aufbau stark und verfügen über Halter für die Ober- und Unterkieferabdrücke und sollen dann dem Zahntechniker die Möglichkeit geben, die vom Patienten üblicherweise beim Kauen durchgeführten Bewegungen nachzuempfinden bzw. nachzustellen. Der Zahntechniker kann dann in die vom Zahnarzt gelieferten und z. B. Lücken aufweisenden Unter- und Oberkieferabdrücke die Ersatzzähne einmodellieren, die dann vom Zahnarzt mit dem vorhandenen Gebiss beim Patienten zu verbinden sind. Wichtig dabei ist, dass der Zahntechniker beim Herstellen und Erproben des Zahnersatzes oder auch ganzer Zahnscheiben die vom Patienten später durchgeführten Bewegungen mit seinem Artikulator so nachempfinden kann, dass das neu eingefügte Zahngebilde sich möglichst genau einfügt und dem Patienten keine Schmerzen bereitet. Dabei verwendet der Zahntechniker bzw. der Hersteller des Artikulators Schwenkgelenke für das zu verschwenkende Teil des Artikulators, die nur den natürlichen Kiefergelenken sehr allgemein nachempfunden sind und ähnliche Bewegungen zulassen. Abgesehen davon, dass jeder Mensch in der Regel zwei unterschiedlich ausgebildete Kiefergelenke auf beiden Seiten seines Kopfes aufweist, unterscheiden sich diese Kiefergelenke bei mehreren Patienten teilweise erheblich. Die mit dem Artikulator durchgeführten Bewegungen bzw. Bewegungsabläufe entsprechen dann aber nicht mehr dem speziell zu behandelnden Patienten, sondern sind Normbewegungen. Die Folge ist, dass der so hergestellte und restaurierte Zahnersatz sich in das vorhandene Gebiss nicht ohne weiteres einfügt. Der Zahnarzt ist von daher nicht nur gehalten, sondern sogar gezwungen, nach dem Einsetzen des Zahnersatzes oder des Gebisses selbst zu überprüfen, ob die so hergestellten Zähne überhaupt den Bedingungen im Mund des Patienten genügen. Es hängt dann von der Geschicklichkeit des Zahnarztes ab, inwieweit er die vom Zahntechniker hergestellten Zähne so bearbeitet, dass sie dann optimal den speziellen Einsatzbedingungen genügen. Das entsprechende Verfahren zur Herstellung von Zahnersatz ist daher von vielen Unwägbarkeiten und Geschicklichkeiten sehr stark abhängig. Aus der US 3,321,832 A aus dem Jahre 1963 ist ein Verfahren bekannt, bei dem mit Hilfe eines Bauteils außerhalb des Mundes des Patienten also extraoral versucht wird, die von den Kiefergelenken des Patienten bei Bewegungen des Unterkiefers ausgeführten Bewegungsbahnen zu ermitteln und dann vor den Mund zu übertragen und dort zu Gelenkduplikaten zu verarbeiten, die dann als Artikulatorgelenke in Artikulatoren eingesetzt werden sollen. In so ausgerüstete Artikulatoren werden die Abdrücken von Ober- und Unterkiefer eingesetzt und vom Zahntechniker bei der Herstellung des Zahnersatzes zur Nachahmung von Kiefergelenkbewegungen benutzt. Ähnlich arbeitet das aus der CA 1,284,041 C bekannte Verfahren. Mit einem zum Artikulator gehörenden Vorgerät werden die vom Unterkiefer ausgeführten Bewegungen in außerhalb des Mundes angeordnete Registratträger eingeformt und dann als Artikulatorgelenke eingesetzt. Die Registratträger werden vom Vorgerät getrennt und am Artikulator festgelegt. Beim Herstellen der Gelenkduplikate vor dem Mund des Patienten können kleine Verschiebungen, Schrägstellungen o. ä. auftreten, die zu falschen Bewegungen des Artikulators führen, die dann eben nicht mit den Kiefergelenkbewegungen des Patienten identisch sind. In der WO 2005/060865 A1 und der US 2007/196782 A1 werden Artikulatoren mit "special teeth" und einem Aufbissübertragungsgerät beschrieben.

Der Erfindung liegt daher die Aufgabe zugrunde, ein Herstellungsverfahren und eine entsprechende Vorrichtung zu schaffen, mit denen auf den jeweiligen Patienten zugeschnittene Restaurationsarbeiten am menschlichen Gebiss weiter vereinfacht und vor allem präzisiert werden können.

Die Aufgabe wird gemäß der Erfindung dadurch verfahrensmäßig gelöst, dass die vom Unterkiefer des Patienten und den Kiefergelenken ausgeführten Bewegungen geführt durch einen Stützstift, der über eine Oberkieferplatte im Oberkiefer festgehalten wird, und über einer Unterkieferplatte zugeordnete Halbkugeln, die im Abstand zueinander und mit dem Stützstift in der Achse vom Stützstift/Kiefergelenk ein Dreieck bildend angeordnet werden, unter Entkopplung des Patientengebisses, in ein plastisches, einem der Oberkieferplatte zugeordneten Registratträger eingebettetes Material als Gelenkraumduplikat intraoral übertragen werden und dass unter Nutzung dieser Gelenkraumduplikate extraoral nach dem Storchenschnabelprinzip weitere Gelenkraumduplikate von jedem Kiefergelenk hergestellt und im Artikulator als Artikulatorgelenk verwendet werden.

Die Aufnahme der Bewegungsbahnen bzw. entsprechender Gelenkraumduplikate des jeweils speziellen Kiefergelenkes ist durch Anwendung des geometrischen Prinzips des Strahlensatzes und dessen Anwendung im sog. Storchenschnabel nach dem "Dreibein-Prinzip" möglich, wobei das tatsächlich und biologisch vorhandene individuelle Kiefergelenk inklusive Diskus des Patienten sicher ausgelesen werden kann. Mit dem Verfahren ist es also möglich, den echten Kiefergelenken des jeweiligen Patienten entsprechende Gelenkraumduplikate herzustellen, die es dann dem Zahntechniker, aber auch dem Zahnarzt ermöglichen, schon im ersten Schritt, d. h. vor allem beim Zahntechniker, solche Zähne herzustellen, die anschließend ohne Probleme beim Patienten eingesetzt werden können und wo eine Nachbearbeitung in aller Regel entfallen kann, weil der genaue Biss schon beim Zahntechniker in jeder Hinsicht verwirklicht ist. Der für das Herstellen der Gelenkraumduplikate notwendige Aufwand ist nicht größer als die frühere Nachbearbeitung beim Zahnarzt, hat aber den großen Vorteil, dass außerhalb des Mundes des Patienten alle Eventualstellungen von Ober- und Unterkiefer zueinander nachgestellt werden können, wie sie sich später im Mund mit dem entsprechenden Zahnersatz oder dem neuen Gebiss abspielen. Beim Zahntechniker wird mit Hilfe des Verfahrens ein Zahnersatz hergestellt, der genau auf das Gebiss/die Kiefergelenke des jeweiligen Patienten zugeschnitten ist und keiner Nachbearbeitung bedarf.

Mit Hilfe der Kaukraft des Patienten ist es möglich, durch entsprechende Bewegungen des Unterkiefers und ständige Aufrechterhaltung einer geringen Kaukraft die biologische Kiefergelenkssituation "abzufahren". Dabei durchlaufen die Kondylen ihre Fossa mit ständigem mechanischem Kontakt über den Diskus zueinander. Die Kiefergelenk-Kondylus-Fossa-Beziehung wird mit einem mechanisch wieder verwendbaren und medizinisch einwandfreien Registrat registriert und dann über das Storchenschnabelprinzip wieder vergrößert um das originale Gelenkraumduplikat herzustellen, dass dann im Artikulator eingesetzt zu einem "Patientenartikulator" führt. Das Kiefergelenkduplikat wird extraoral hergestellt, in der Regel wohl über den Zahntechniker, wobei das Gelenkraumduplikat in der Regel aufbewahrt mehrfach für den Patienten eingesetzt werden kann.

Bei entsprechender Anpassung des jeweiligen Artikulators ist es gemäß der Erfindung auch möglich, dass die intraoral hergestellten Gelenkraumduplikate direkt in den Artikulator eingebaut werden, wo sie mit Gelenkkugeln zusammenwirkend als Artikulatorgelenke verwendet werden. Dies hat den Vorteil, dass nicht über das Storchenschnabelprinzip gesondert weitere extraoral Gelenkraumduplikate verwendet werden müssen.

Eine weitere zweckmäßige Ausführungsform des Verfahrens sieht vor, dass bei der Herstellung des Zahnersatzes mit dem die Gelenkraumduplikate aufweisenden Artikulator noch vor Herstellung des Zahnersatzes oder währenddessen aus der am Patienten gemessenen Camperschen Ebene die genaue Okklusionsebene am Artikulator eingestellt wird. Die sog. Okklusionsebene benötigt das zahntechnische Labor um die richtige Stellung zwischen Ober- und Unterkiefer im Artikulator einstellen zu können. Die Okklusionsebene verläuft parallel zur Camperschen Ebene, wobei diese die gedachte Bezugslinie am knöchernen Schädel ist. Sie definiert durch die Spina nasalis anterior und die untere Begrenzung des Porus akkustikus, d. h. sie verläuft etwa zwischen Ohr und Nase des Patienten. Diese kann also beim Patienten leicht abgenommen werden, wobei sie zur Verwirklichung der Okklusionsebene dann in den Artikulator eingestellt wird.

Eine weitere Ausführung der Erfindung sieht vor, dass beim Herstellen des entsprechenden Zahnersatzes jeglicher Art im verfahrensgemäß programmierten Artikulator der Stützstift mit Oberkieferplatte weiter im Artikulator fixiert wird, während die Gelenkkugeln und die intraoralen Gelenkraumduplikate daraus entfernt werden, wenn der Zahnersatz im Artikulator hergestellt und überprüft wird. Der Stützstift und die extraoralen Gelenkraumduplikate geben jetzt die Wege für die Restauration vor, wobei der Zahntechniker die notwendigen Modellbewegungen vornimmt. Während also der Stützstift für die weiteren Arbeiten noch benötigt wird, kann das kleinere Gelenkraumduplikat nun aus dem Artikulator entfernt werden, es sei denn es passt in diesen genau hinein.

Weiter vorn ist darauf hingewiesen worden, dass beim Reproduzieren des Kiefergelenkes die Kondylen ihre Fossa mit ständigem mechanischem Kontakt über dem Diskus durchlaufen. Die Bewegungen der Kiefergelenke werden dreidimensional in das im Registratträger eingebrachte plastische, aushärtbare Material die intraoralen Gelenkraumduplikate ergebend transformiert. Diese dreidimensionalen Bewegungsräume können dann genau auch weiter übertragen und zu den Gelenkraumduplikaten bzw. den extraoralen geformt werden, wobei sich ebenfalls dort dreidimensionale Gelenkräume ergeben.

Nach einer weiteren Ausbildung des erfindungsgemäßen Verfahrens werden die bei der Artikulation d. h. beim "Abfahren" der Kiefergelenkfossa erhaltenen Werte zusätzlich oder nur elektronisch erfasst, gespeichert und über CadCam oder ähnliches zur Formung der Gelenkbewegungsräume in der Schablone/Registratträger oder direkt der Gelenkraumduplikate verwendet. Egal ob mit dem mechanisch hergestellten Registrat oder mit irgendeiner elektronischen Variante oder auch anderen Registrierverfahren wird die Nutzung des o. g. geometrischen Prinzips für die Aufzeichnung der individuellen Kiefergelenkssituation des Patienten und deren technische Umsetzung verwirklicht.

Zur Durchführung des Verfahrens dient eine Vorrichtung, die aus einem Artikulator und einem Vorgerät besteht. Gemäß der vorrichtungsgemäßen Lösung ist vorgesehen, dass die die individuellen Artikulatorgelenke wiedergebenden Bewegungsräume und damit die Gelenkraumduplikate intraoral durch UK-Bewegungen des Patienten direkt oder unter Zwischenschalten eines Datenspeichers im Material der Registratträger hergestellt und so ausgebildet und angeordnet sind, dass nach dem Storchenschnabelprinzip die Bewegungsbahnen der Gelenkraumduplikate in aushärtbarem Gelenkmaterial in den Gelenkregistratträgern der Artikulatorgelenke übertragbar sind, wobei die Registratträger und der Stützstift der OK-Platte und die die UK-Bewegungen des Patienten übertragenden und die Bewegungsräume schaffenden Halbkugeln der UK-Platte zugeordnet sind. Der Artikulator nimmt also dieses Vorgerät so auf, dass die darin gespeicherten Gelenkraumduplikate nach dem Storchenschnabelprinzip zu entsprechend vergrößerten oder gleichgroßen Gelenkraumduplikaten gebracht werden können, um dann in den Artikulatorgelenken zusammen mit den Gelenkkugeln als entsprechend optimales Gelenk zu dienen. Damit ist es möglich, einen derartigen Artikulator mit Artikulatorgelenken auszurüsten, die genau den Kiefergelenken des jeweiligen Patienten entsprechen und damit letztlich sogar als Kiefergelenkduplikate bezeichnet werden könnten. Diese Gelenkraumduplikate können bei einem derartigen Artikulator auf beiden Seiten durchaus unterschiedlich sein, sodass der Zahntechniker die Gelegenheit erhält, die notwendigen Anpassungen, Überprüfungen usw. genau dem jeweiligen Patienten angepasst vornehmen zu können, sodass die damit hergestellten Ersatzzähne, Brücken und Ähnliches genau dem Bedürfnissen des jeweiligen Patienten entsprechend herzustellen sind. Dies hat den großen Vorteil, dass dann auch direkt Gelenkraumduplikate herstellbar sind, die in den jeweiligen Artikulator eingebaut werden können. Hiermit wird darauf hingewiesen, dass es nicht unbedingt der mechanischen stofflichen Registrate bedarf, sondern dass auch mit elektronischen Varianten gearbeitet werden kann oder ähnlichen Registrierverfahren, die es möglich machen, die Form bzw. die Bewegungsräume des Kiefergelenkes des Patienten identisch oder zumindest nahezu identisch in ein Gelenkraumduplikat als Artikulatorgelenk für derartige Artikulatoren umzuformen. Hierzu ist es zweckmäßig, die Bewegungsräume datenmäßig elektronische erfasst und direkt zu Gelenkraumduplikaten elektronisch weiterverarbeitet oder durch Einformen in elastisches, aushärtbares Gelenkmaterial zu Gelenkewegungsräumen eingeformt sind.

Da die Artikulatorgelenke bzw. ihr Ersatz ja auf den jeweiligen Patienten zugeschnitten werden sollen, sieht die Erfindung vor, dass die Artikulatorgelenke bzw. die der menschlichen Kiefergelenkfossa nachgebildeten Gelenkraumduplikate lösbar und durch die Gelenkraumduplikate des jeweiligen nächsten Patienten ersetzbar ausgebildet sind. Dies bedeutet, dass der Artikulator vom eigentlichen Hersteller mit Normartikulatorgelenken angeliefert wird, die aber gegenüber den bisher zum Einsatz kommenden Schwenkgelenken lösbar mit dem eigentlichen Artikulator verbunden sind. So können diese Artikulatorgelenke dann durch ein auf den jeweiligen Patienten zugeschnittenes Artikulatorgelenk ersetzt werden, was dann die genaue Bearbeitung bzw. Restaurierung möglich macht.

Bei dem beschriebenen Vorgerät ist eine lösbare OK-Platte mit Stützstift und eine lösbare UK-Platte mit als Halbkugeln ausgebildeten Übertragungsstiften als Messfühler vorgesehen, die in der Achse Stützstift/Kiefergelenk mit diesem ein Dreieck bildend angeordnet sind. Die OK-Platte ist neben dem Stützstift mit mit dem plastischen, aushärtbaren Material gefüllten Registratträgern ausgerüstet, die korrespondierend mit den Halbkugeln des Messfühlers positioniert sind. Die Artikulatorgelenke des Artikulators sind dann von den Gelenkraumduplikaten des jeweiligen Patienten mit den Gelenkkugeln des Artikulatorgelenkes gebildet, die durch Abtasten der Bewegungsräume/Fossa im Registratträger nach dem Storchenschnabelprinzip extraoral in das plastische, aushärtbare Gelenkmaterial im Gelenkregistratträger den Kiefergelenken des Patienten entsprechend erzeugt sind, und die am Schwenkgelenkplatz des Artikulators angeordnet sind. Das notwendige Dreibein aus Stützstift und Übertragungsstiften wird hier durch Halbkugeln und dem identischen Stützstift dargestellt, wobei hierüber das entsprechend verkleinerte "Kiefergelenk" im plastischen, aushärtbaren Material wiedergegeben wird. Dies erfolgt mechanisch. Anschließend wird dieses kleinere "Kiefergelenk" dann wieder in das entsprechend dem menschlichen Kiefergelenk große Modell umgewandelt, in dem die Bewegungsräume bzw. Gelenkräume im Registratträger abgefahren und dann nach dem Schnorchelschnabelprinzip in die Gelenkmaterialmasse im Gelenkregistratträger eingeformt werden. Damit erreicht man dann ein dem echten Kiefergelenk entsprechendes Artikulatorgelenk, das man einsetzen kann, um mit einem derartigen Artikulator genau dem Patienten entsprechend arbeiten zu können. Als ein solches Material wird vorzugsweise lichthärtender Kunststoff oder 2K-Kunststoff oder aber auch knetbares 2K-Silikon eingesetzt. Die Platzierung der Halbkugeln lehnt sich in ihrer Lage an das sogenannte Bonnwill-Dreieck an. Die Größe diese Dreiecks sollte bei 1/5 - 1/6 des Bonnwill-Dreiecks liegen. In den Eckpunkten des Dreiecks sind im Oberkiefer die Registratfächer oder Registratträger angeordnet, in die dann die Halbkugeln die Gelenkräume einformen. Diese Bewegungen sollten gleichmäßig ausgeführt werden, wobei es zweckmäßig ist, wenn der Unterkiefermodellhalter von Hand und/oder motorisch die notwendigen sagittalen und transversalen Bewegungen ausführend ausgebildet ist. Dabei kann Hand entsprechend gearbeitet werden und zwar mit motorischer Unterstützung oder auch nur motorisch. Während der Stützstift auch bei der späteren Bearbeitung der Abdrücke bzw. Ersatzzähne benötigt wird, gilt dies für die Registrattäger mit ihren Gelenkräumen nicht. Die Registratträger sind unabhängig vom Stützstift mit der OK-Platte verbindbar oder der Oberkiefermodellhalter ist über einen eigenen Stützstift verfügend ausgebildet. Im letzteren Fall kann dann der Registratträger und der Stützstift als Baueinheit verwendet und gehandhabt werden, wobei der eigentliche Artikulator bei den späteren Arbeiten mit seinem eigenen Stützstift arbeiten kann.

Wie auch schon beim Erläutern des Verfahrens angedeutet, ist es möglich, dass die im Mund des Patienten erzeugten Gelenkraumduplikate mit Registträger und Material direkt in den Artikulator mit den Gelenkkugeln zusammenwirkend einsetzbar ausgebildet sind. Das Übertragen der Gelenkraumformen ist dann nicht notwendig, wenn man eben einen Artikulator verwendet, in den diese im Mund erzeugten Gelenkraumduplikate einsetzbar ausgebildet sind.

Zur Optimierung der Vorrichtung ist es vorteilhaft, wenn der Artikulator einen die beim Patienten gemessene Campersche Ebene übernehmenden Tragring aufweist, der dem Oberteil des Artikulators zugeordnet ist. Dieser Tragring ist mit einem über Teleskop verstellbaren Stützring ausgerüstet. Über eine derartige Hilfseinrichtung ist es möglich, die für die Ermittlung und Festlegung der Okklusionsebene wichtige Lage zu ermitteln und zwar durch Ermittlung der Camperschen Ebene, die dann zweckmäßig durch die parallel arbeitenden Teleskopbeine in das Gipsmodell oder an das Gipsmodell so herangeführt wird, dass der Zahntechniker oder der Behandelnde die Lage der Okklusionsebene genau erkennen kann. Dies ist vorteilhaft möglich, weil die Okklusionsebene und die Campersche Ebene parallel zueinander liegende Ebenen darstellen. Neben der Einstellung oder Ermittlung der Okklusionsebene ist es für die Handhabung eines Artikulators wichtig, auch unterschiedliche Bisslagen einzustellen bzw. einstellen zu können. Bei dem bisherigen Vorrichtungen bzw. Artikulatoren war dies nur mit großem Aufwand notwendig, dass heißt das Oberkiefermodell musste entfernt und durch eine neue Einstellung dann wieder am Rahmenoberteil befestigt werden, sodass eine neue Artikulation erforderlich war. Dieser große Aufwand wird häufig von den Zahntechnikern nicht ausgeführt, zumal die Gefahr besteht, dass dabei Schäden entstehen, die eine Neuaufnahme der Modelle erforderlich machen.

Bei den bekannten Aritkulatoren werden sogenannte Stützstifte verwendet, um das Rahmenoberteil in einer vorgegebenen Position zu halten. Die Spitze der Stützstifte ist in einer Art Teller geführt, um so die jeweils optimale Lage vorzugeben bzw. einfach erreichen zu lassen. Nachteilig ist, dass dieser Stützstift eigentlich immer ein Hindernis darstellt, wenn der Zahntechniker die Ober- und Unterkiefermodelle behandeln oder auch bewegen will. Dieses Problem wird erfindungsgemäß dadurch behoben, dass der für die Festlegung einer vertikalen Ober- Unterkieferposition erforderliche, als Fixierstift ausgebildete Stützstift im retralen Raum des Artikulators angeordnet ist und am feststehenden Rahmenbodenteil des Artikulatorrahmens mit einem dem beweglichen Rahmenoberteil zugeordneten, ein aushärtbares Stiftmaterial aufnehmenden Registratbehälter zusammenwirkend befestigt ist. Dieser Registratbehälter mit dem aushärtbaren Stiftmaterial übernimmt die Aufgabe des Tellers beim herkömmlichen Stützstift, sodass leicht immer wieder die notwendige Position bei der vertikalen Bewegung erreicht werden kann. Dadurch dass jetzt der Stützstift bzw. Fixierstift in den hinteren Bereich eines Artikulators gelegt wird, ist der vordere Bereich mit den Ober- und Unterkiefermodellen leicht erreichbar und leicht einsehbar, was eben vorher durch den vorgeordneten Stützstift erschwert worden ist.

Nach einer zweckmäßigen Weiterbildung ist vorgesehen, dass der Fixierstift hinter den Artikulatorgelenken im retralen Raum des Artikulators und am hochgezogenen Bogenteil des Rahmenbodenteils angebracht und angeordnet ist, während der Registratbehälter dem beweglichen Rahmenoberteil zugeordnet ist. Dieser ermöglicht eine möglichst günstige und wenig Raum erforderliche Anordnung des Fixierstiftes mit Zubehör.

Mit Hilfe der vorliegenden Erfindung ist es aber möglich, ohne Veränderung oder Anpassung des einigen Artikulators unterschiedliche Bisslagen darzustellen, was erfindungsgemäß dadurch erreicht wird, dass das bewegliche Rahmenoberteil über Schwenkgelenke mit einem sie verbindenden Schwenkbogen und über die Artikulatorgelenke geführt gelenkig mit dem Rahmenbodenteil verbunden ist, wobei das Rahmenoberteil zusätzlich über einen verstellbaren Positionsstabilisator am Schwenkbogen festlegbar und über die Artikulatorgelenke räumlich verschwenkbar dem Rahmenbodenteil zugeordnet ist. Dieser Positionsstabilisator ist dabei so ausgebildet, dass er unterschiedliche Bisslagen möglich macht, ohne dass das eingesetzte Oberkiefermodell dabei verändert werden muss bzw. vom Rahmenoberteil gelöst und entsprechend wieder angepasst angesetzt werden muss. Hier ist die Möglichkeit gegeben, dass Rahmenoberteil gezielt in eine Lage zu bringen, die den neuen Biss darstellt, der entweder vom Zahnarzt vorgegeben oder vom Zahntechniker vorgeschlagen ist, sodass dann alle notwendigen Anpassungen an den einzusetzenden Zähnen oder Brücken möglich sind.

Vorteilhaft ist es dabei, dass zur Änderung der Bisslage ein für das Einartikulieren der Grundposition im Positionsstabilisator verwendete Standardteil durch eine die gewünschte, neue Bisslage vorgebendes linsenförmiges Freiformteil ersetzbar ist. Diese "Anpassung" der Bisslage ist also ausgesprochen einfach und erübrigt ein weiteres Neuartikulieren. Vielmehr wird nur das Standardteil oder Normteil durch ein gezieltes eine neue Bisslage vorgebendes Freiformteil ersetzt, sodass dann die ganze Umrüstung des Artikulators schon abgeschlossen ist und die Arbeiten entsprechend schnell und einfach durchgeführt werden können.

Zur Herstellung oder zur Verfügungstellung entsprechender Freiformteile ist es von Vorteil, wenn das linsenförmige Freiformteil aus einem Trägerteil, das eine feste Ankopplung an das Rahmenoberteil bzw. den Schwenkbogen ermöglichend ausgebildet ist, und einem Linsenteil besteht, dass aus Kunststoff besteht und durch vorgegebene Annäherung von Rahmenbodenteil und Rahmenoberteil geformt und dann ausgehärtet ist. Derartige Freiformteile werden geschaffen, indem das eine feste Ankopplung der variablen Positionsanforderung des Rahmenoberteils an die feststehende Position des Rahmenunterteils ermöglichende Trägerteil mit diesen linsenförmigen Teilen ergänzt wird. Diese Freiform entsteht dadurch, dass auf das Trägerteil freiformbarer Kunststoff aufgebracht wird, der unter einer definierten Annäherung von Oberteil und Unterteil (Bissregistrat) geformt/modelliert und anschließend ausgehärtet wird. Das so entstandene Freiformteil ermöglicht eine stabile und reproduzierbare Positionierung. Damit wird es möglich, selbst feinste Abweichungen der Bisslage des Patienten schnell und einfach abzubilden, für die Diagnostik vergleichbar darzustellen sowie schnell und sicher zu korrigieren.

Der Positionsstabilisator selbst verfügt neben dem Standardteil oder Freiformteil über eine durch Kugelgelenke mit Drehmomentstütze am Schwenkbogen fixierbare und wieder lösbare Achse. Damit ist die Möglichkeit gegeben, beim Fixieren eben die Auf- und Abbewegung des Oberteils durchzuführen, während bei gelöster Achse sämtliche raumorientierten Bewegungen des Oberkiefermodells durchgeführt werden können. Dabei ist es von Vorteil, wenn das Standardteil und die linsenförmigen Freiformteile zwischen den Kugelgelenken und auf der Achse verschiebbar angeordnet sind.

Die Erfindung zeichnet sich insbesondere dadurch aus, dass ein Verfahren und eine Vorrichtung geschaffen sind, mit denen es möglich ist, die menschlichen Kiefergelenke so auf die Vorrichtung, d. h. also im Artikulator zu übertragen, dass mit diesem Artikulator die patientengerechten Bewegungen ausgeführt werden können, die der Zahntechniker braucht, um die Restauration bzw. die Zahnersatz-Zähne oder das ganze Gebisse so zu formen und fertig zu stellen, dass sie vom Zahnarzt möglichst ohne jede Nachbearbeitung beim Patienten eingesetzt werden können und dann voll ihre Funktion erfüllen. Dies ist möglich, weil nach diesem Verfahren die an sich nicht einsehbaren Kiefergelenke mit ihren Bewegungsräumen bzw. Gelenkräumen zwischen Fossa und Kondylen auf einen Zwischenträger oder gleich auf ein Gelenkraumduplikat übertragen werden. Diese werden dann in den Artikulator eingesetzt, um die beschriebenen Bewegungen genau so durchzuführen, wie sie vom Patienten im Original ausgeführt werden, wenn er seinen Unterkiefer entsprechend bewegt oder dieser vom behandelnden Zahnarzt bewegt wird. Dabei ist es auch möglich, die Okklusionsebene genau so einzustellen, wie sie beim Patienten ist und zwar bei jedem beliebigen Artikulator, sodass auch die notwendigen Feinheiten berücksichtigt werden können, um Original-Ersatzzähne zu schaffen. Weiter in Vorteil, dass durch die Versetzung des bisherigen Stützstiftes in den retralen Raum des Artikulators der Bereich mit den Ober- und Unterkiefermodellen gut einsehbar und erreichbar gemacht wird, wobei der vorher vorn angebrachte Stützstift jetzt als hinten angebrachter Fixierstift auch noch mit einer Ausbildung versehen wird, die eine genaue Anordnung immer wieder möglich macht, weil der Fixierstift in verformbarem und aushärtbarem Material positioniert wird. Schließlich ist ein enormer Vorteil damit verbunden, dass das Rahmenoberteil mit dem Oberkiefermodell mit dem Rahmenbodenteil über Artikulatorgelenke verbunden ist, die dem Originalkiefergelenk entsprechend ausgebildet sind und über einen verstellbaren Positionsstabilisator so gehalten werden, dass auch unterschiedlichste Bisslagen eingestellt werden können, ohne dass es erforderlich ist, das Oberkiefermodell abzunehmen, neu einzuartikulieren oder gar insgesamt neu auszubilden. Der Positionsstabilisator ermöglicht nicht nur zwei sondern auch mehrere unterschiedliche Bisslagen, ohne dass dafür ein großer Arbeitsaufwand erforderlich wird.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine schematisiert wiedergegebene Kiefergelenksituation mit eingesetztem Vorgerät,
- Figur 2: einen Artikulator mit einem Registratträger und geformter Masse für die Übertragung des Gelenkraumduplikates,
- Figur 3: einen Artikulator mit einem ein Gelenkraumduplikat verwendenden Artikulatorgelenk,
- Figur 4: einen Artikulator mit eingezeichneter Camperschen Ebene und Okklusionsebene,
- Figur 5: einen Artikulator mit dem die Okklusionsebene vorgebenden Stützring und dem die Campersche Ebene wiedergebenden Tragring,
- Figur 6: einen Artikulator mit Positionsstabilisator und in den retralen Bereich gelegten Fixierstift,
- Figur 7: ein Standardteil eines Positionsstabilisators,
- Figur 8: verschiedene Ausführungen eines Freiformteiles eines Positionsstabilisators,
- Figur 9: ein Kugelgelenk mit Drehmomentstütze des Positionsstabilisators,
- Figur 10: eine Seitenansicht des Positionsstabilisators mit seinen Einzelteilen,
- Figur 11: einen Artikulator gemäß Figur 6 in Vorderansicht und
- Figur 12: den Artikulator gemäß Figur 6 in perspektivischer Wiedergabe.

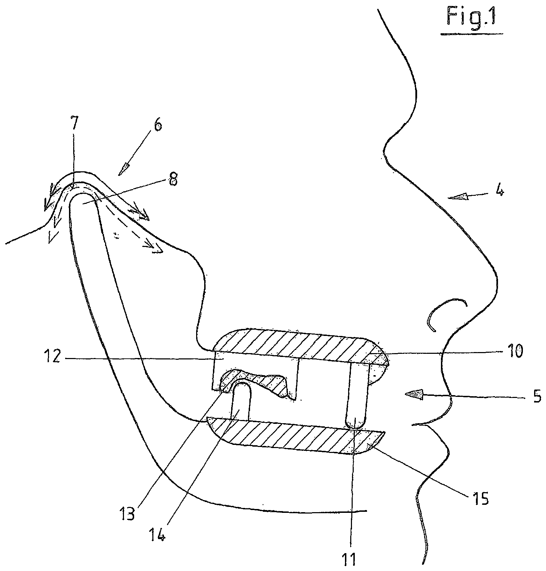

Figur 1 zeigt den Kopf eines Patienten 4 in Seitenansicht, wobei eines seiner Kiefergelenke 6 schematisch mit der Fossa 7 und den Kondylen 8 angedeutet ist. Im Mund des Patienten 4 ist das sog. Vorgerät 5 angeordnet, bestehend aus der OK-Platte 10 und der UK-Platte 15. Die UK-Platte 15 ist mit einem oder mehreren Messfühlern 14 ausgerüstet, während die OK-Platte 10 den an sich bekannten Stützstift 11 sowie den Registratträger 12 aufweist. In diesen Registratträger 12 ist plastisches Material 13 eingefüllt, das beim Bewegen des Kiefergelenkes 6 bzw. des Unterkiefers des Patienten 4 durch den Messfühler 14 entsprechend der Lage des Kiefergelenkes 6 bzw. der dort vorhandenen Bewegungsräume verformt wird. Der Bewegungsraum bzw. der Gelenkraum des natürlichen Kiefergelenkes 6, vorgegeben durch die Fossa 7 und die Kondylen 8 entspricht somit dem im plastischen Material 13 geschaffenen Bewegungsraum 22 bzw. den Gelenkräumen.

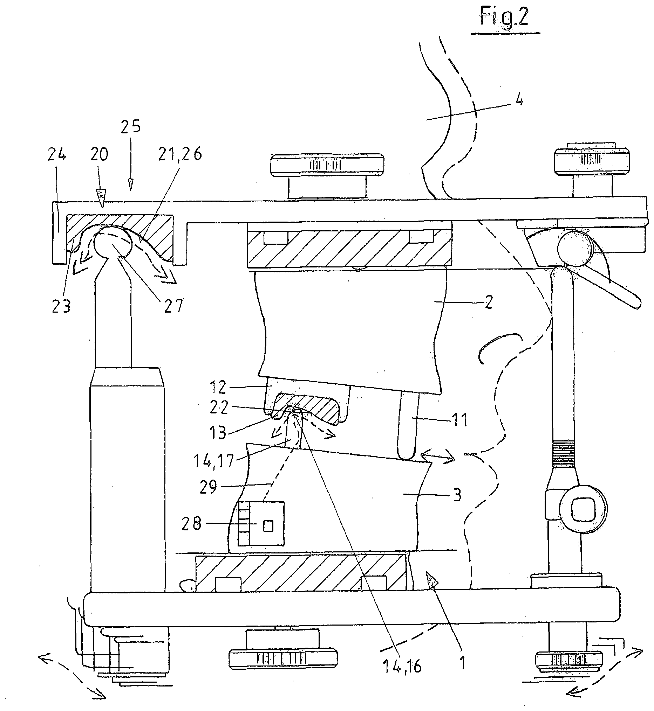

Figur 2 gibt zunächst einen Artikulator 1 wieder. Solche Artikulatoren 1 dienen der mechanischen Simulation von Bewegungen des Unterkiefers gegenüber dem Oberkiefer an eingespannten Modellen, also dem Oberkiefermodellhalter 2 und dem Unterkiefermodellhalter 3. Er wird im Wesentlichen für zwei Aufgaben gebraucht, nämlich einmal der Diagnostik von Stellung und Bewegung der gegenüberliegenden Zahnbögen sowie zweitens zur Herstellung von laborgefertigten Restaurationen vom Inlay bis zum Zahnersatz. In beiden Fällen ist das Ziel eine möglichst naturgetreue Übertragung der Mundsituation in den Artikulator, um Okklusionsprobleme zu erkennen und dem Patienten eine störungsfreie Okklusion auch nach Einsetzen der neuen Zähne oder Brücken zu ermöglichen.

Bei dem in Figur 2 dargestellten Artikulator 1 ist der Unterkiefermodellhalter 3 mit Messfühlern 14 in Form von Übertragungsstiften 17 mit oben aufsitzenden Halbkugeln 16 ausgerüstet. Der Oberkiefermodellhalter 2 weist einmal den Stützstift 11 auf, der entweder ihm zugeordnet ist oder aber mit dem Registratträger 12 eine Baueinheit darstellt, wobei dieser Registratträger 12 hier schon das ausgeformte und gehärtete plastische Material 13 aufweist. Beim Bewegen des Unterkiefers oder besser des Oberkiefers durch den Artikulator 1 fahren die Halbkugeln 16 die Bewegungsräume 22 bzw. Gelenkräume im plastischen Material 13 ab. Das ansonsten übliche Artikulatorgelenk 20 ist bei dieser Ausführung durch einen Gelenkregistratträger 24 mit Gelenkmaterial 23 ausgerüstet, wobei das Gelenkmaterial 23 mit dem plastischen Material 13 praktisch identisch ist. Nach dem Storchenschnabelprinzip wird beim Bewegen des Unterkiefers und dem Abfahren der Bewegungsräume 22 im Gelenkmaterial 23 nun ein Gelenkbewegungsraum 26 bzw. mehrere Gelenkräume ausgeformt. Die Halbkugel 27 ist Teil des Artikulators 1, der die entsprechenden Gelenkbewegungsräume 26 bzw. die Gelenkraumduplikate 21 ausformt. Damit ist nach dem Storchenschnabelprinzip ein dem natürlichen Kiefergelenk 6 des Patienten 4 entsprechendes Gelenkraumduplikat 21 geschaffen, das nun mit der Halbkugel 27 als Artikulatorgelenk 20 am Schwenkgelenkplatz 25 verwendet werden kann bzw. verwendet wird.

Neben der beschriebenen Übertragung der Bewegungen nach dem Storchenschnabelprinzip bzw. Erzeugen entsprechender Gelenkraumduplikate im Bereich des Artikulatorgelenkes 20 ist auch die Möglichkeit gegeben, dass mit Hilfe des Messfühlers 14 und eines eingebauten Datenspeichers 28 die vom Messfühler 14 ausgeführten Bewegungen in den Bewegungsräumen 22 ermittelt, umgesetzt und gespeichert werden, um dann später oder wann eben notwendig zur Erzeugung des patientengerechten Gelenkraumduplikates 21 eingesetzt zu werden. Mit 29 ist die Verbindungsleitung zum Messfühler 14 bezeichnet, wobei auch andere Verbindungsmöglichkeiten denkbar sind.

Da es sich bei den geschaffenen Gelenkbewegungsräumen 26 um eine dreidimensionale Wiedergabe der Bewegungsräume 22 bzw. der Gelenkraumduplikate 21 bzw. der natürlichen Kiefergelenke 6 handelt, können nach entsprechender Umrüstung bzw. Ausrüstung des Artikulators 1 alle möglichen Bewegungen des Unterkiefers ausgeführt werden und zwar in sagittaler wie auch in transversaler Richtung genau nach den Gegebenheiten beim Patienten.

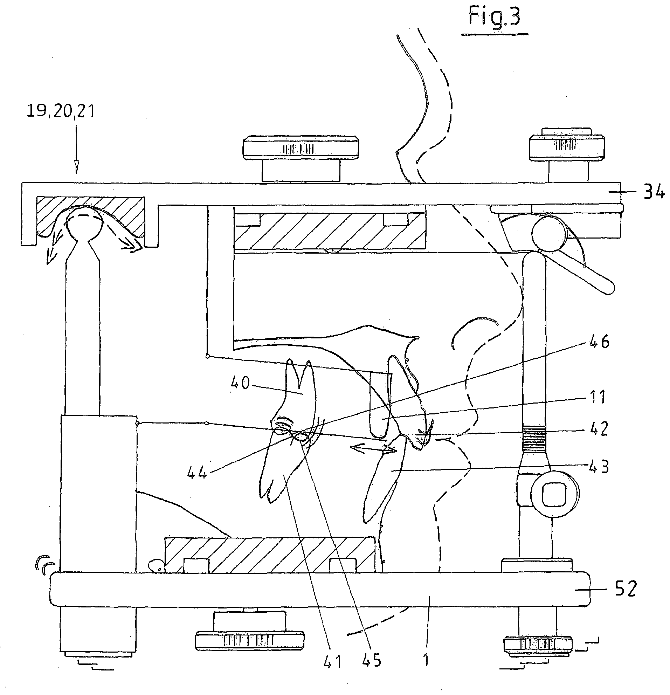

Figur 3 zeigt den Artikulator beim Einsatz im zahntechnischen Labor, wobei nun in dem derart "programmierten" Artikulator 1 entsprechender Zahnersatz jeglicher Art gefertigt werden kann. Dazu ist es nur notwendig, den Registratträger 12 mit dem plastischen Material 13 und die Messfühler 14 aus dem System zu entfernen, während der Stützstift 11 egal in welcher Art verbleibt, weil dafür die weitere Arbeit für das miteinander korrelierende System Stützstifte - künstliches Kiefergelenk bzw. Gelenkraumduplikate 21 notwendig ist. Erkennbar ist in Figur 3 das entsprechende Gelenkraumduplikat 21, das ja als Artikulatorgelenk 20 zusammen mit den Halbkugeln 27 arbeitet sowie der Stützstift 11 und ein Zahn 40 im Oberkiefer und ein Zahn 41 im Unterkiefer, wobei angedeutet ist, dass diese so angeordnet und gehalten sind, dass die Kontaktpunkte 44 optimal liegen und Höcker 45 und Grübchen 46 richtig aufeinander reiben und geführt sind. Mit 42 und 43 sind die Schneidezähne des Oberkiefers und Unterkiefers bezeichnet.

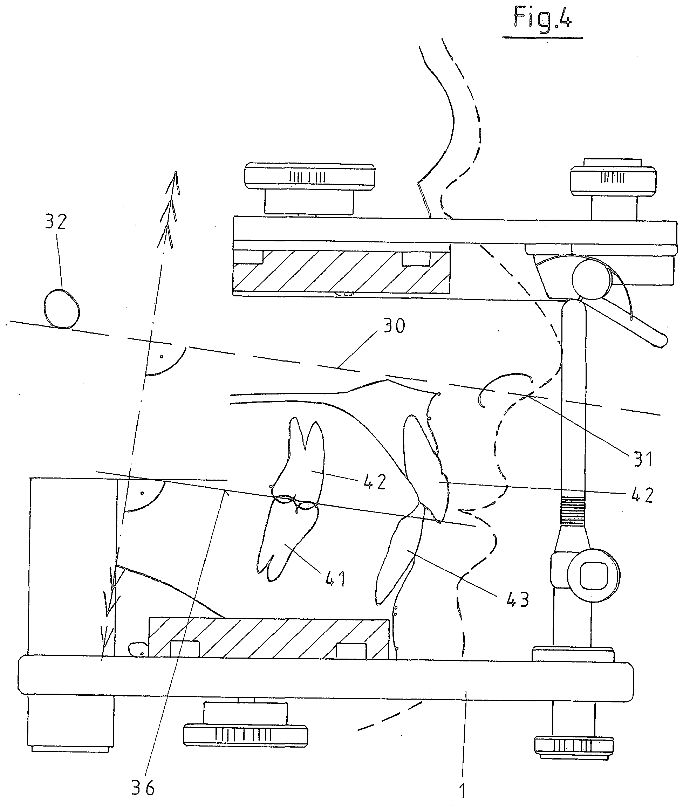

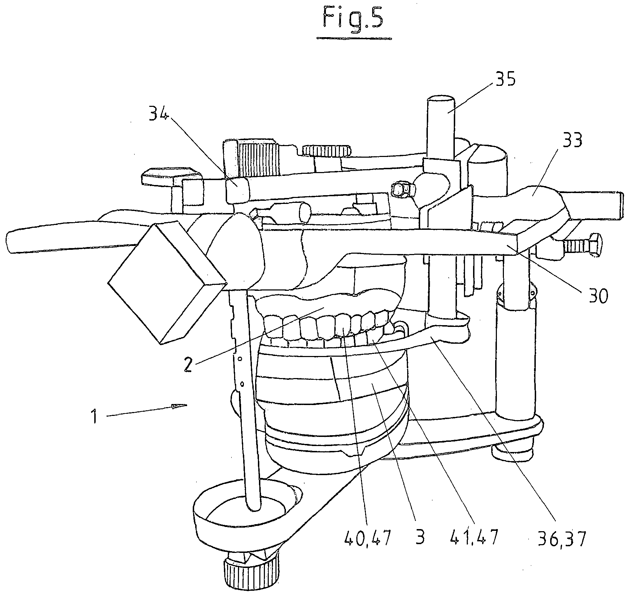

Ein weitgehend übereinstimmendes Bild gibt Figur 4 wieder, nur dass hier neben den besagten Zähnen 40, 41, 42, 43 auch die Okklusionsebene 36 und die Campersche Ebene 30 angedeutet sind. Die am Patienten 4 zu ermittelnde Campersche Ebene 30 verläuft zwischen Nase 31 und Ohr 32 des Patienten 4. Sie wird bei Figur 5 durch den Tragring 33 dargestellt, der am Oberteil 34 gehalten ist. Über Teleskopbeine 35 ist ein Stützring 37 mit der Okklusionsebene 36 genau in die Lage gebracht worden, in der der Zahntechniker diese Okklusionsebene 36 zur genauen Beobachtung der Ober- und Unterkieferbewegungen im Artikulator 1 benötigt. Mit 47 sind die hier im Oberkiefer bzw. Unterkiefer zusammengefassten Patientenmodellzähne zusätzlich bezeichnet. Erkennbar ist, dass mit einer derartigen Einrichtung bzw. Vorrichtung die genaue Lage der Okklusionsebene 36 sicher und schnell eingestellt werden kann. Damit ist ein weiterer Parameter in die Rekonstruktion von Zahnersatz sicher einzubeziehen, der nach den Erkenntnissen der Wissenschaft für eine Restauration notwendig ist.

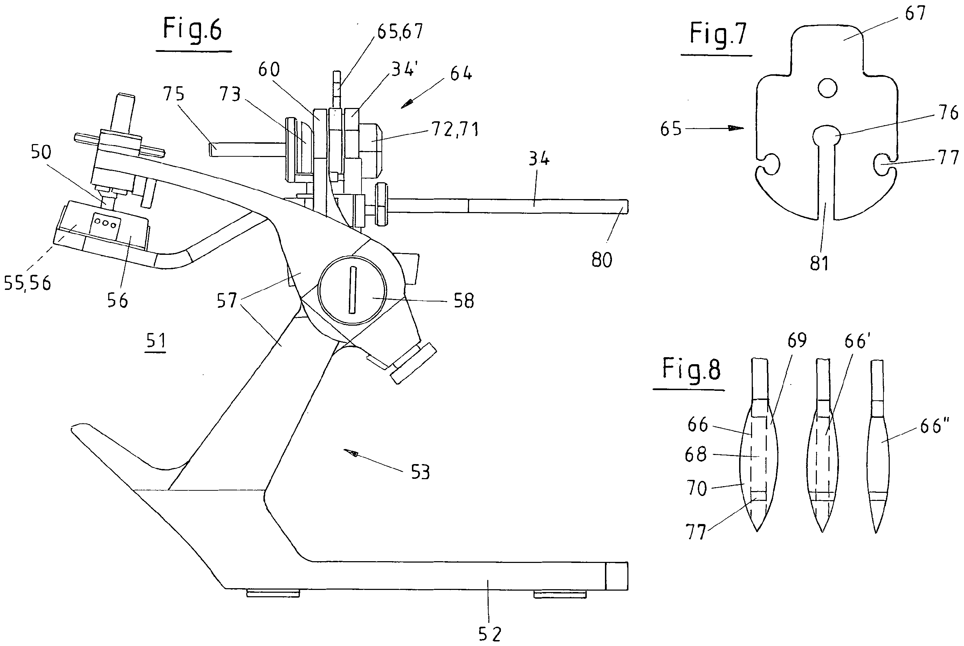

Figur 6 zeigt einen besonders guthandhabbaren Artikulator 1, der aus dem Rahmenoberteil 34 besteht, das an einem elegant ausgebildeten Rahmenbodenteil 52 schwenkbar gehalten ist. Das eigentliche Rahmenbodenteil 52 mit dem hier nicht dargestellten Unterkiefermodell verfügt über einen besonders geformten Artikulatorrahmen 53, wobei das Rahmenbodenteil 52 über eine S-Form ähnliches Bogenteil 57 mit dem Rahmenoberteil 34 verbunden ist.

Erkennbar ist, dass der vordere Teil des Artikulators 1, dort wo die Kiefermodelle angebracht sind, völlig frei zugänglich ist, weil der als Fixierstift 50 ausgebildete Stützstift 11 hier dem retralen Raum 51 des Artikulators 1 zugeordnet ist. Hierzu ist das Bogenteil 57 über das Rahmenoberteil 34 führend hochgezogen und verfügt über eine Halterung für den Fixierstift 5. Dem Ende des darunter liegenden Rahmenoberteils 34 ist ein Registratbehälter 56 mit Stiftmaterial 55 zugeordnet, wobei dieses Stiftmaterial 55 aushärtbar ist, sodass damit die genaue Lage und Anordnung des Fixierstiftes 50 im Registratbehälter 56 bleibend vorgegeben werden kann.

Das eigentliche Rahmenoberteil 34 ist über einen Schwenkbogen 60 und über die Artikulatorgelenke 20 und 61 mit dem Rahmenbodenteil 52 verbunden. Der Schwenkbogen 60 ist über Schwenkgelenke 58, 59 schwenkbar am Rahmenbodenteil 52 bzw. dem Bogenteil 57 angelenkt.

Neben der retralen Anordnung des Fixierstiftes 50 ist auch erkennbar, dass das Rahmenoberteil 34 in dem vorgeordnetem Bereich über eine Schnabelspitze 80 verfügt, die es leichter macht, die notwendigen Bewegungen mit dem Rahmenoberteil 34 auszuführen, um die auch vom Kiefer des jeweiligen Patienten 4 ausgeführten Bewegungen nachahmen zu können.

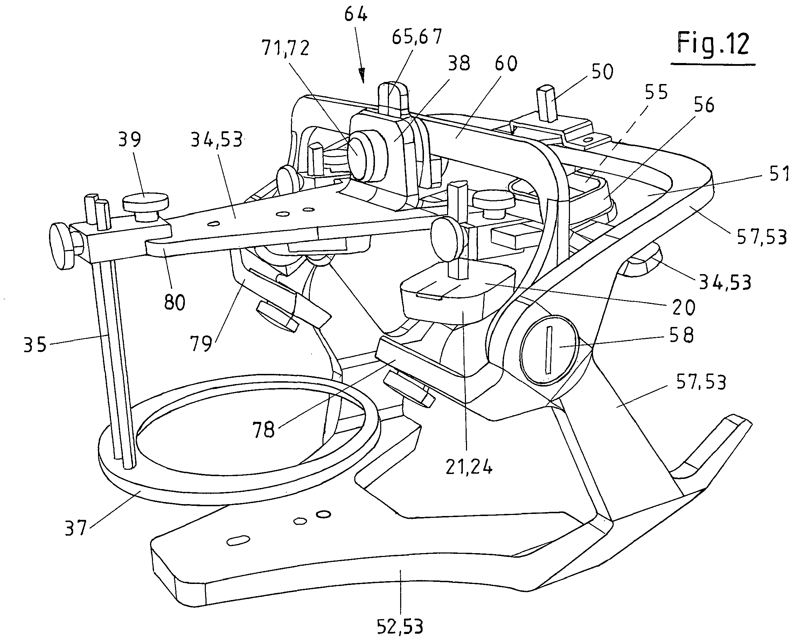

Die Optimierung dieser Bewegungsmöglichkeiten ist darin zu sehen, dass das Rahmenoberteil 34 über einen Ansatz 38, was aus Figur 12 zu ersehen ist, und einen Positionsstabilisator 64 am Schwenkbogen 60 festlegbar ist. In Figur 6 ist angedeutet, dass dieser Positionsstabilisator aus einer Achse 75 besteht, die an einem Ende über ein Kugelgelenk 71 mit Hülse 72 und Drehmomentstütze 74 und an der anderen Seite über ein Kugelgelenk 73 an dem Schwenkbogen 60 festlegbar und auch wieder davon lösbar ist. Zwischengefügt ist ein Standardteil 65 mit einem Griffstück 67, das leicht herausnehmbar ist und wie in Figur 7 und 8 angedeutet durch ein ähnlich aufgebautes Freiformteil 66 ersetzbar ist. Dieses Freiformteil 66 besteht aus einem Trägerteil 68 und dem beidseitig angesetzten Linsenteil 69, 70, die aus härtbarem Kunststoff bestehen und die jeweilige Bisslage vorgeben. Entsprechend sind in Figur 8 Freiformteile 66, 66', 66" gezeigt. Das Freiformteil 66 oder auch das Standardteil 65 können auf die Achse 75 aufgeschoben werden, weil sie über ein Achsloch 76 verfügen, das einen langen Führungsschlitz 81 aufweist. Mit 77 sind Führungslöcher bzw. Fixierlöcher bezeichnet, die eine genaue Positionierung des Freiformteils 66 bzw. Standardteils 65 auf der Achse 75 möglich machen.

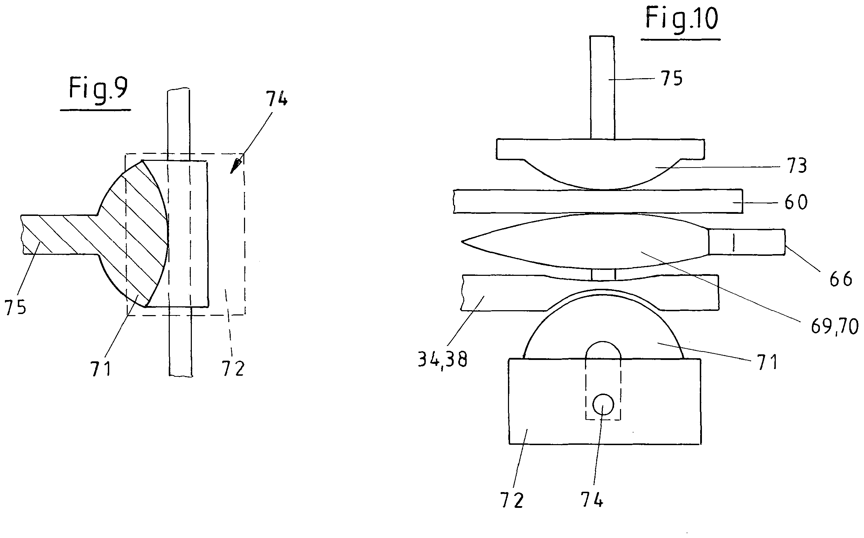

Die Figur 9 und die Figur 10 zeigen vergrößert einen Positionsstabilisator 64 mit dem Kugelgelenk 73, das so ausgebildet ist, dass der gesamte Positionsstabilisator 64 festlegbar ist. Dann ist mit 60 der Schwenkbogen bezeichnet und mit 66 das Freiformteil. Anschließend ist der Ansatz 38 des Rahmenoberteils 34 gezeigt sowie das Kugelgelenk 71 mit Hülse 72 und Drehmomentstütze 74. Letzteres ist vergrößert in Figur 9 wiedergegeben.

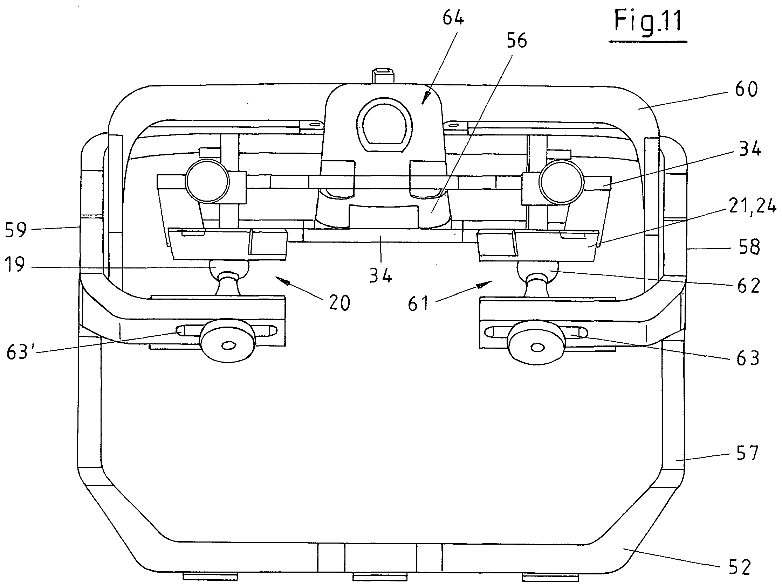

Figur 11 zeigt eine Vorderansicht eines entsprechenden Artikulators 1 nach Figur 6, wobei hier erkennbar ist, dass das Rahmenoberteil 34 mit dem Schwenkbogen 60 verbunden ist und Bewegungen ausführen kann, die durch die Artikulatorgelenke 20 und 61 mit den darin untergebrachten Gelenkraumduplikaten 21 geführt sind. Diese Artikulatorgelenke 20, 61 arbeiten mit den Gelenkkugeln 19, 62 zusammen, die über Halterungen 63, 63' an entsprechenden Halterungsbögen 78, 79 des Rahmenbodenteils 52 gehalten werden. Diese Gelenke 20, 61 ermöglichen somit bei entsprechender Freigabe des Positionsstabilisators 64 ein Bewegen des Rahmenoberteils 34 genau in der Art, wie in es durch das natürliche Kiefergelenk 6 des Patienten 4 vorgegeben ist. Erkennbar ist hier auch, dass dadurch, dass der Fixierstift 50 im retralen Raum 51 untergebracht ist, der vordere Bereich mit den Ober- und Unterkiefermodellen leicht erreichbar und vor allen Dingen gut einsehbar ist. Dies ist auch Figur 12 zu entnehmen, wobei hier allerdings zur Einregulierung der Okklusionsebene der Schnabelspitze 80 des Rahmenoberteils 34 ein Stützring 37 mit Teleskopbein 35 und Fixierungsteil 39 zugeordnet ist. Nach dem Einstellen der Okklusionsebene kann dieses Bauteil wieder entfernt werden, sodass dann der Bereich vorne zwischen den entsprechend vorgebauten Teilen von Rahmenoberteil 34 und Rahmenbodenteil 52 gut erreichbar und einsehbar sind.

## Patentansprüche

1. Verfahren zur Herstellung von Zahnersatz, bei dem zunächst ein Abdruck des Oberkiefers und des Unterkiefers mit den Zähnen hergestellt wird und bei dem dann in einer als Artikulator (1) bezeichneten Vorrichtung zur Simulation von Unterkieferbewegungen auf entsprechenden die Ober- bzw. Unterkieferabdrücke aufnehmenden Trägern zum Zahntechniker verbracht werden, woraufhin dort der Zahnersatz unter Bewegung entweder des Unterkieferabdruckes oder meist des Oberkieferabdruckes um die den Kiefergelenken des Patienten (4) ähnlichen, durch Bewegung des Unterkiefers des Patienten (4) ermittelten Bewegungsbahnen und daraus hergestellten und als Artikulatorgelenke (20) eingesetzten Gelenkraumduplikate (21) geformt und unter Berücksichtigung meist des Unterkieferabdruckes fertig gestellt, dann zum Zahnarzt zurückgebracht, dem Patienten (4) eingesetzt und vom Zahnarzt nachbearbeitet wird,
**dadurch gekennzeichnet,**
**dass** die vom Unterkiefer des Patienten (4) und den Kiefergelenken (6) ausgeführten Bewegungen geführt durch einen Stützstift (11), der über eine Oberkieferplatte (10) im Oberkiefer festgehalten wird, und über einer Unterkieferplatte (15) zugeordnete Halbkugeln (16), die im Abstand zueinander und mit dem Stützstift (11) in der Achse vom Stützstift/Kiefergelenk (6) ein Dreieck bildend angeordnet werden, unter Entkopplung des Patientengebisses, in ein plastisches, einem der Oberkieferplatte (10) zugeordneten Registratträger (12) eingebettetes Material (13) als Gelenkraumduplikat (21) intraoral übertragen werden und dass unter Nutzung dieser Gelenkraumduplikate (21) extraoral nach dem Storchenschnabelprinzip weitere Gelenkraumduplikate (21) von jedem Kiefergelenk (6) hergestellt und im Artikulator (1) als Artikulatorgelenk (20) verwendet werden.

2. Verfahren nach Anspruch 1,
**dadurch gekennzeichnet,**
**dass** die intraoral hergestellten Gelenkraumduplikate direkt in den Artikulator eingebaut werden, wo sie mit Gelenkkugeln zusammenwirkend als Artikulaturgelenke verwendet werden.

3. Verfahren nach Anspruch 1,
**dadurch gekennzeichnet,**
**dass** bei der Herstellung des Zahnersatzes mit dem die Gelenkraumduplikate aufweisenden Artikulator noch vor Herstellung des Zahnersatzes oder währenddessen aus der am Patienten gemessenen Camperschen Ebene die genaue Okklusionsebene am Artikulator eingestellt wird.

4. Verfahren nach Anspruch 1,
**dadurch gekennzeichnet,**
**dass** beim Herstellen entsprechenden Zahnersatzes jeglicher Art im verfahrensgemäß programmierten Artikulator der Stützstift mit Oberkieferplatte weiter im Artikulator fixiert wird, während die Gelenkkugeln und die Gelenkraumduplikate daraus entfernt werden, wenn der Zahnersatz im Artikulator hergestellt und überprüft wird.

5. Verfahren nach Anspruch 1,
**dadurch gekennzeichnet,**
**dass** die bei der Artikulation d. h. beim "Abfahren" der Kiefergelenkfossa erhaltenen Werte zusätzlich oder nur elektronisch erfasst, gespeichert und über CadCam oder ähnliches zur Formung der Gelenkbewegungsräume in der Schablone im Registratträger oder direkt für die Gelenkraumduplikate verwendet werden.

6. Vorrichtung zur Simulation von Unterkieferbewegungen und damit zur Durchführung des Verfahrens nach den Ansprüchen 1 - 5, bestehend aus einem Artikulator (1) mit Oberkiefermodellhalter (2) mit Stützstift (11) und einem Unterkiefermodellhalter (3), wobei Oberkiefermodellhalter (2) und der Unterkiefermodellhalter (3) über Artikulatorgelenke (20), die mit Hilfe eines Vorgerätes (5) den menschlichen Kiefergelenken (6) möglichst angepasst herstellt sind, gelenkig miteinander verbunden sind,
**dadurch gekennzeichnet,**
**dass** die die individuellen Artikulatorgelenke (20) wiedergebenden Bewegungsräume (22) und damit die Gelenkraumduplikate (21) intraoral durch UK-Bewegungen des Patienten (4) direkt oder unter Zwischenschalten eines Datenspeichers (28) im Material (13) der Registratträger (12) hergestellt und so ausgebildet und angeordnet sind, dass nach dem Storchenschnabelprinzip die Bewegungsbahnen der Gelenkraumduplikate (21) in aushärtbarem Gelenkmaterial (23) in den Gelenkregistratträgern (24) der Artikulatorgelenke (20) übertragbar sind, wobei die Registratträger (12) und der Stützstift (11) der OK-Platte (10) und die die UK-Bewegungen des Patienten (4) übertragenden und die Bewegungsräume (22) schaffenden Halbkugeln (16) der UK-Platte (15) zugeordnet sind.

7. Vorrichtung nach Anspruch 6,
**dadurch gekennzeichnet,**
**dass** die Bewegungsräume (22) datenmäßig elektronisch erfasst und direkt zu Gelenkraumduplikaten (21) elektronisch weiterverarbeitet oder durch Einformen in elastisches, aushärtbares Gelenkmaterial (23) zu Gelenkbewegungsräumen (26) eingeformt sind

8. Vorrichtung nach Anspruch 6,
**dadurch gekennzeichnet,**
**dass** die Artikulatorgelenke (20) bzw. der menschlichen Kiefergelenkfossa (7) nachgebildete Gelenkraumduplikate lösbar und durch die Gelenraumkduplikate (21) des jeweiligen nächsten Patienten ersetzbar ausgebildet sind.

9. Vorrichtung nach Anspruch 6,
**dadurch gekennzeichnet,**
die im Mund des Patienten (4) erzeugten Gelenkraumduplikate (21) mit Registratträger (12) und Material (13) direkt in den Artikulator (1) mit den Gelenkkugeln (19, 21) zusammenwirkend einsetzbar ausgebildet sind.

10. Vorrichtung nach Anspruch 6,
**dadurch gekennzeichnet,**
**dass** der Artikulator (1) einen die beim Patienten (4) gemessene Campersche Ebene (30) übernehmenden Tragring (33) aufweist, der dem Oberteil (34) des Artikulators (1) zugeordnet ist.

11. Vorrichtung nach Anspruch 6,
**dadurch gekennzeichnet,**
**dass** der für die Festlegung einer vertikalen Ober- Unterkieferposition erforderliche, als Fixierstift (50) ausgebildete Stützstift (11) im retralen Raum (51) des Artikulators (1) angeordnet ist und am feststehenden Rahmenbodenteil (52) des Artikulatorrahmens (53) mit einem dem beweglichen Rahmenoberteil (34) zugeordneten, ein aushärtbares Stiftmaterial (55) aufnehmenden Registratbehälter (56) zusammenwirkend befestigt ist.

12. Vorrichtung nach Anspruch 11,
**dadurch gekennzeichnet,**
**dass** der Fixierstift (50) hinter den Artikulatorgelenken (20) im retralen Raum (51) des Artikulators (1) und am hochgezogenen Bogenteil (57) des Rahmenbodenteils (52) angebracht angeordnet ist, während der Registratbehälter (56) dem beweglichen Rahmenoberteil (34) zugeordnet ist.

13. Vorrichtung nach Anspruch 12,
**dadurch gekennzeichnet,**
**dass** das bewegliche Rahmenoberteil (34) über Schwenkgelenke (58, 59) mit einem sie verbindenden Schwenkbogen (60) und über die Artikulatorgelenke (20, 61) geführt gelenkig mit dem Rahmenbodenteil (52) verbunden ist, wobei das Rahmenoberteil (34) zusätzlich über einen verstellbaren Positionsstabilisator (64) im Schwenkbogen (60) festlegbar und über die Artikulatorgelenke (20, 61) räumlich verschwenkbar dem Rahmenbodenteil (52) zugeordnet ist.

14. Vorrichtung nach Anspruch 13,
**dadurch gekennzeichnet,**
**dass** zur Änderung der Bisslage ein für das Einartikulieren der Grundposition im Positionsstabilisator (64) verwendetes Standardteil (65) durch ein die gewünschte, neue Bisslage vorgebendes, linsenförmiges Freiformteil (66) ersetzbar ist.

15. Vorrichtung nach Anspruch 14,
**dadurch gekennzeichnet,**
**dass** das linsenförmige Freiformteil (66) aus einem Trägerteil (68), das eine feste Ankopplung an das Rahmenoberteil (34) bzw. den Schwenkbogen (60) ermöglichend ausgebildet ist, und einem Linsenteil (69, 70) besteht, das aus Kunststoff besteht und durch vorgegebene Annäherung vom Rahmenbodenteil (52) und Rahmenoberteil (34) geformt und dann ausgehärtet ist.

16. Vorrichtung nach Anspruch 13,
**dadurch gekennzeichnet,**
**dass** der Positionsstabilisator (64) das Rahmenoberteil (34) und den Schwenkbogen (60) über eine durch Kugelgelenke (71, 73) mit Drehmomentstützte (74) fixierbare und wieder lösbare Achse (75) verbindend ausgebildet ist.

17. Vorrichtung nach Anspruch 14,
**dadurch gekennzeichnet,**
**dass** das Standardteil (65) und die linsenförmigen Freiformteile (66, 66', 66") zwischen den Kugelgelenken (71, 73) und auf der Achse (75) verschiebbar angeordnet sind.

## Claims

1. Process for making dentures, in which first of all an impression of the maxilla and of the mandible with the teeth is made and is then brought to the dental technician in a device referred to as an articulator for the simulation of mandible movements on carriers that support the maxilla and mandible impressions respectively, where the denture under movement either of the mandible impression or usually of the maxilla impression is formed around articular cavity duplicates similar to the patient's mandibular and maxillary joints determined through movement of the patient's mandible and made from this and applied as articulator joints and completed taking account usually of the mandible impression, brought back to the dentist, inserted in the patient's mouth and then reworked by the dentist,
**characterised in that**
the movements carried out by the patient's jaw joints guided through a supporting pin, which is held in the maxilla by means of maxilla plate, and via hemispheres assigned to a mandible plate, which are arranged to form a triangle at a distance to each other and with the supporting pin in the axis of supporting pin/jaw joint, under decoupling of the patient's teeth, are transmitted intraorally into a plastic material embedded in a registration carrier assigned to the maxilla plate as articular cavity duplicate and that using these articular cavity duplicates extra orally in accordance with the pantograph principle additional articular cavity duplicates can be made from each jaw joint and used in the articulator as articulator joint.

2. Process in accordance with claim 1,
**characterised in that**
the intraorally produced articular cavity duplicates are installed directed into the articulator, where they are used as articulator joints interacting with joint balls.

3. Process in accordance with claim 1,
**characterised in that**
on production of the dentures with the articulator having the articular cavity duplicates before the production of the dentures or during this the exact occlusal plane is set at the articulator from the Camper's plane measured on the patient.

4. Process in accordance with claim 1,
**characterised in that**
on production of corresponding dentures of all types in the articulator programmed in accordance with the process the supporting pin with maxilla plate is still fixed in the articulator, whereas the joint balls and the articular cavity duplicates are removed from this, when the dentures are produced in the articulator and checked.

5. Process in accordance with claim 1,
**characterised in that**
the values obtained on articulation, i.e. when the jaw joint fossa are "moved down", are additionally or only electronically recorded, saved and used via CadCam or similar to form the joint movement cavities in the template in the registration carrier or directly for the articular cavity duplicates.

6. Fixture for the simulation of mandible movements and thus for carrying out the process in accordance with claims 1 - 5, consisting of an articulator (1) with maxilla model holder (2) with supporting pin (11) and a mandible model holder (3), whereby the maxilla model holder (2) and the mandible model holder (3) are linked flexibly to each other via articulator joints (20), which are made as closely as possible like human jaw joints (6) with the help of a pre-implement (5),
**characterised in that**
the movement cavities (22) that reproduce the individual articulator joints (20) and thus the articular cavity duplicates (21) are produced intraorally through mandible movements of the patient (4) directly or with interposition of a data memory (28) in the material (13) of the registration carrier (12) and are formed and arranged in such a way that the movement paths of the articular cavity duplicates (21) can be transferred in accordance with the pantograph principle in curable joint material (23) in the joint registration carriers (24) of the articulator joints (20), whereby the registration carriers (12) and the supporting pin (11) of the maxilla plate (10) and the hemispheres (16) that transfer the mandible movements of the patient (4) and create the movement cavities (22) are allocated to the mandible plate (15).

7. Fixture in accordance with claim 6,
**characterised in that**
the data for the movement cavities (22) are recorded electronically and processed further directly electronically into articular cavity duplicates (21) or are moulded into joint movement cavities (26) through moulding in elastic, curable joint material (23).

8. Fixture in accordance with claim 6,
**characterised in that**
the articulator joints (20) and/or the articular cavity duplicates (21') reproduced on the basis of the human joint fossa (7) are designed to be detachable and replaceable with the articular cavity duplicates (21) of the next patient (4') in each case.

9. Fixture in accordance with claim 6,
**characterised in that**
the articular cavity duplicates (21) created in the mouth of the patient (4) are designed to be usable with the registration carrier (12) and material (13) directly in the articulator (1) working together with the joint balls (19, 21).

10. Fixture in accordance with claim 6,
**characterised in that**
the articulator (1) has a supporting ring (33) that takes over the Camper's plane (30) measured on the patient (4), which is allocated to the upper part (34) of the articulator (1).

11. Fixture in accordance with claim 6,
**characterised in that**
the supporting pin (11) that is required for fixing a vertical maxilla/mandible position and is designed as a fixing pin (50) is located in the retral space (51) of the articulator (1) and is fastened jointly to the fixed frame base part (52) of the articulator frame (53) with a registration container (56) allocated to the movable frame upper part (34) holding a curable pin material (55).

12. Fixture in accordance with claim 11,
**characterised in that**
the fixing pin (50) is located behind the articulator joints (20) in the retral space (51) of the articulator (1) and on the raised curved section (57) of the frame base part (52), while the registration container (56) is allocated to the movable frame upper part (34).

13. Fixture in accordance with claim 12,
**characterised in that**
the movable frame upper part (34) is connected via rotatable joints (58, 59) with a swivelling bend (60) that connects them and via the articulator joints (20, 61) flexibly with the frame base part (52), whereby the frame upper part (34) can be fixed in addition via an adjustable position stabiliser (64) in the swivelling bend (60) and is allocated spatially swivellable via articulator joints (20, 61) to the frame base part (52).

14. Fixture in accordance with claim 13,
**characterised in that**
to change the bite a standard part (65) used for articulation of the base position in the position stabiliser (64) can be replaced with a lenticular free-form part (66) that simulates the desired new bite.

15. Fixture in accordance with claim 14,
**characterised in that**
the lenticular free-form part (66) consists of a support element (68), which is designed to enable fixed coupling to the frame upper part (34) or the swivelling bend (60), and a lens part (69, 70), which is made of plastic and is shaped through a given approach by the frame base part (52) and frame upper part (34) and then cured.

16. Fixture in accordance with claim 13,
**characterised in that**
the position stabiliser (64) is designed to connect the frame upper part (34) and the swivelling bend (60) via an axle (75) that is fixable and detachable again through ball joints (71, 73) with torque support (74).

17. Fixture in accordance with claim 14,
**characterised in that**
the standard part (65) and the lenticular free-form parts (66, 66', 66") are arranged to be movable between the ball joints (71, 73) and on the axle (75).

## Revendications

1. Procédé destiné à fabriquer des prothèses dentaires, dans lequel est d'abord réalisé un moulage du maxillaire et de la mandibule avec leurs dents, qui est ensuite amené au technicien dentaire dans un dispositif appelé articulateur destiné à simuler les mouvements de la mandibule sur des supports correspondants réceptionnant les moulages du maxillaire et de la mandibule, à la suite de quoi la prothèse dentaire est formée et fabriquée, en tenant généralement compte du moulage de la mandibule, autour des trajectoires déterminées, pendant le mouvement du moulage de la mandibule ou la plupart du temps du moulage du maxillaire, par le mouvement de la mandibule du patient et des doubles de l'espace articulaire fabriqués à partir de là similaires aux articulations temporomandibulaires du patient et utilisés comme articulations de l'articulateur, puis est ramenée au dentiste qui la reprend pour finition
**caractérisé par le fait**
**que** les mouvements effectués par la mandibule du patient et les articulations temporo-mandibulaires sont enregistrés par une tige d'appui qui est maintenue au-dessus de la plaque du maxillaire, et par une demi-sphère attribuée à la plaque de la mandibule, qui ont été disposées à une certaine distance l'une de l'autre et en formant un triangle avec la tige d'appui dans l'axe de la tige d'appui/de l'articulation temporo-mandibulaire, la denture du patient étant découplée, sont transférés intraoralement dans un matériau plastique incorporé en tant que double de l'espace articulaire dans un support d'enregistrement attribué à la plaque du maxillaire, d'autres doubles de cet espace articulaire étant, pour chaque articulation temporo-mandibulaire, fabriqués extraoralement d'après le principe du bec de cigogne en utilisant ces doubles de l'espace articulaire, et utilisés dans l'articulateur en tant qu'articulation de l'articulateur.

2. Procédé selon la revendication 1,
**caractérisé par le fait**
**que** les doubles de l'espace articulaire fabriqués intraoralement sont directement incorporés dans l'articulateur, où ils sont utilisés en y jouant le rôle d'articulations de l'articulateur.

3. Procédé selon la revendication 1,
**caractérisé par le fait**
**qu'**au cours de la fabrication de la prothèse dentaire avec l'articulateur présentant les doubles de l'espace articulaire, le plan d'occlusion précis est réglé sur l'articulateur à partir du plan de Camper mesuré sur le patient avant même de fabriquer la prothèse dentaire ou pendant la fabrication de cette dernière.

4. Procédé selon la revendication 1,
**caractérisé par le fait**
**que** lors de la fabrication d'une prothèse dentaire correspondante de quelque nature que ce soit dans l'articulateur programmé selon le procédé, la tige d'appui avec la plaque du maxillaire continue à être fixée dans l'articulateur, tandis les rotules et les doubles de l'espace articulaire en sont retirés pendant que la prothèse dentaire est fabriquée et vérifiée dans l'articulateur.

5. Procédé selon la revendication 1,
**caractérisé par le fait**
**que** pour l'articulation, les valeurs obtenues pour l'articulation c'est-à-dire lors du « parcours » de la fosse mandibulaire sont saisies, enregistrées en outre ou seulement par des moyens électroniques, et sont utilisées via CadCam ou un système similaire destiné à former les espaces du mouvement de l'articulation dans le gabarit du d'enregistrement ou directement pour les doubles de l'espace articulaire.

6. Dispositif destiné à simuler des mouvements de la mandibule et ainsi à exécuter le procédé selon les revendications 1 - 5, consistant en un articulateur (1) avec support d'un modèle du maxillaire (2) avec tige d'appui (11), et un support d'un modèle de la mandibule (3), sachant que le support du modèle du maxillaire (2) et le support du modèle de la mandibule (3) sont reliés de façon articulée par l'intermédiaire d'articulations de l'articulateur (20) qui sont fabriquées à l'aide d'un appareil préalable (5) de façon aussi proches que possible des articulations temporo-mandibulaires (6) humaines,
**caractérisé par le fait**
**que** les espaces de mouvement (22) qui restituent les articulations de l'articulateur individuelles (20) et ainsi les doubles de l'espace articulaire (21) sont réalisés intraoralement par les mouvements de la mandibule (4) du patient directement ou bien en interposant un support de données (28) dans le matériau (13) du support d'enregistrement (12), et sont constitués et disposés de façon à ce que, d'après le principe d'un bec de cigogne, les trajectoires des doubles de l'espace articulaire (21) puissent être transposées dans un matériau articulaire durcissable (23) dans les supports de l'enregistrement (24) des articulations de l'articulateur (20), sachant que le support d'enregistrement (12) et la tige d'appui (11) de la plaque de la mandibule (10) et les demi-sphères (16) transmettant les mouvements de la mandibule du patient (4) et créant les espaces de mouvement (22) sont attribués à la plaque de la mandibule (15).

7. Dispositif selon la revendication 6,
**caractérisé par le fait**
**que** les espaces de mouvement (22) sont saisis par des moyens électroniques en termes de données et sont directement transformés des moyens électroniques en des doubles de l'espace articulaire (21), ou bien sont transformés en espaces de mouvement articulés (26) par formage dans un matériau d'articulation élastique durcissable (23).

8. Dispositif selon la revendication 6,
**caractérisé par le fait**
**que** les articulations de l'articulateur (20) ou les doubles de l'espace articulaire (21') reproduisant la fosse mandibulaire (7) humaine sont formés de façon à pouvoir être détachés et remplacés par les doubles de l'espace articulaire (21) du prochain patient (4') respectif.

9. Dispositif selon la revendication 6,
**caractérisé par le fait**
**que** les doubles de l'espace articulaire (21) générés dans la bouche du patient (4) avec le support d'enregistrement (12) et le matériau (13) sont réalisés par les rotules (19, 21) agissant ensemble de façon à pouvoir être directement utilisés dans l'articulateur (1).

10. Dispositif selon la revendication 6,
**caractérisé par le fait**
**que** l'articulateur (1) présente une bague porteuse (33) reprenant le plan de Camper (30) mesuré chez le patient (4) qui est attribué à la partie supérieure (34) de l'articulateur (1).

11. Dispositif selon la revendication 6,
**caractérisé par le fait**
**que** la tige d'appui (11) nécessaire pour fixer une position verticale du maxillaire et de la mandibule réalisée sous la forme d'une tige de fixation (50) est disposée dans l'espace en retrait (51) de l'articulateur (1) et est fixée sur la partie formant le fond de cadre (52) fixe du cadre de l'articulateur (53) en agissant avec un support d'enregistrement (56) réceptionnant un matériau de tige (55) durcissable attribué à la partie supérieure mobile du cadre (34).

12. Dispositif selon la revendication 11,
**caractérisé par le fait**
**que** la tige de fixation (50) est disposée en étant posée derrière les articulations de l'articulateur (20) dans l'espace en retrait (51) de l'articulateur (1) et sur la partie remontée de l'arc (57) de la partie formant le fond du cadre (52), tandis que le récipient de l'enregistrement (56) est attribué à la partie supérieure mobile du cadre (34).

13. Dispositif selon la revendication 12,
**caractérisé par le fait**
**que** la partie supérieure mobile du cadre (34) est reliée en étant guidée de façon articulée avec la partie formant le fond du cadre (52) par l'intermédiaire d'articulations pivotantes (58, 59) avec un arc pivotant (60) les reliant et par l'intermédiaire des articulations de l'articulateur (20, 61), sachant que la partie supérieure du cadre (34) peut être en outre fixée dans l'arc pivotant (60) par l'intermédiaire d'un stabilisateur de position (64) réglable et est affectée au plan spatial à la partie supérieure du cadre (52) par l'intermédiaire des articulations de l'articulateur (20, 61).

14. Dispositif selon la revendication 13,
**caractérisé par le fait**
**que** pour modifier la position de la denture, une pièce standard (65) utilisée pour articuler la position de base dans le stabilisateur de position (64) peut être remplacée par une pièce moulée librement en forme de lentille (66) donnant la nouvelle position de denture souhaitée.

15. Dispositif selon la revendication 14,
**caractérisé par le fait**
**que** la pièce moulée librement en forme de lentille (66) consiste en une pièce porteuse (68) qui est réalisée de façon à permettre un accouplement ferme avec la partie supérieure du cadre (34) ou l'arc pivotant (60), et d'une lentille (69, 70) qui est réalisée en plastique et est formée par rapprochement prescrit de la partie formant le fond du cadre (52) et la partie supérieure du cadre (34) avant d'être durcie.

16. Dispositif selon la revendication 13,
**caractérisé par le fait**
**que** le stabilisateur de position (64) est réalisé en établissant une liaison de manière à pouvoir fixer la partie supérieure du cadre (34) et l'arc pivotant (60) par l'intermédiaire d'un axe (75) assisté par couple de serrage (74) pouvant être fixé et ensuite détaché au moyen de rotules (71, 73).

17. Dispositif selon la revendication 14,
**caractérisé par le fait**
**que** la pièce standard (65) les pièces moulées librement en forme de lentille (66, 66', 66") sont disposées de façon coulissante entre les rotules (71, 73) et sur l'axe (75).
